**Europäisches Patentamt**

**European Patent Office**

**Office européen des brevets**

(11) Veröffentlichungsnummer: **0 512 325 A2**

# EUROPÄISCHE PATENTANMELDUNG

(21) Anmeldenummer: **92106904.3**

(51) Int. Cl.⁵: **G01F 1/075**

(22) Anmeldetag: **23.04.92**

(30) Priorität: **08.05.91 DE 4114978**

(43) Veröffentlichungstag der Anmeldung:
**11.11.92 Patentblatt 92/46**

(84) Benannte Vertragsstaaten:
**AT BE CH DE DK ES FR GB GR IT LI NL PT SE**

(71) Anmelder: **ALLMESS Mess- und Regelgeräte GmbH**
**Am Vossberg 11**

**W-2440 Oldenburg i.H.(DE)**

(72) Erfinder: **Körner, Hans-Holger**
**Platanenallee 39**
**W-2440 Oldenburg i. H.(DE)**

(74) Vertreter: **UEXKÜLL & STOLBERG**
**Patentanwälte**
**Beselerstrasse 4**
**W-2000 Hamburg 52(DE)**

(54) **Fluidzähler,insbesondere Wasserzähler.**

(57) Ein Fluidzähler, insbesondere Wasserzähler mit einem im vom Fluid zu durchströmenden Innenraum eines Gehäuses (1) angeordneten, tangential anzuströmenden Flügelrad (3), das mindestens einen Permanentmagneten (12) trägt, und mit einem Gegenelement (42), das zur Betätigung des Zählwerks (2) mit dem mindestens einen Permanentmagneten (12) zusammenwirkt, weist eine sich in den Innenraum des Gehäuses (1) erstreckende Achse (20) auf, deren freies Ende im Abstand von der Wandung des Gehäuses (1) liegt. Der mindestens eine Permanentmagnet (1) und das Gegenelement (42) sind auf gleicher axialer Höhe angeordnet, und das Flügelrad (3) ist durch ein einziges Lager (9, 10) abgestützt. Am Flügelrad (3) sind Schaufelflächen (7) vorhanden, die bei Drehung Fluid durch einen Ringraum zwischen Flügelrad (3) und Achse (20) drücken, dessen Weite sich mit dem Abstand von den Schaufelflächen (7) verringert.

Fig. 1

EP 0 512 325 A2

Die Erfindung bezieht sich auf einen Fluidzähler, insbesondere einen Wasserzähler mit einem im vom Fluid zu durchströmenden Innenraum seines Gehäuses angeordneten, tangential anzuströmenden Flügelrad, das mindestens einen mit ihm umlaufenden, mit einem Gegenelement des Zählwerkes zusammenwirkenden Permanentmagneten trägt und das um eine Achse drehbar ist, die sich von der das Zählwerk vom Innenraum des Gehäuses trennenden Abdeckung in den Innenraum erstreckt und mit ihrem freien Ende im Abstand vom der der Abdeckung gegenüberliegenden Wandung des Gehäuses liegt, wobei das Flügelrad die Achse im von deren freien Ende entfernten Bereich mit einer in Umfangsrichtung geschlossenen Wandung umgibt und Wasser in axialer Richtung zwischen Achse und Flügelrad transportiert wird.

Bei einem bekannten Wasserzähler dieser Art (DE-B-3 415 366) ist das Flügelrad mittels einer in ihm befestigten, zwischen freiem Ende der Achse und der der Abdeckung gegenüberliegenden Wandung des Gehäuses befindlichen Lagerkugel im Betrieb am freien Ende der Achse axial abgestützt, während benachbart zum freien Ende der Achse und am der Abdeckung näheren Ende des Flügelrades Lagerbuchsen vorhanden sind, mittels derer das Flügelrad drehbar auf der Achse gehalten wird. Am der Abdeckung näheren Ende des Flügelrades sind mehrere Permanentmagneten vorgesehen, die mit Permanentmagneten zusammenwirken, die auf der Mittelachse des Zählwerks sitzen und sich an der dem Innenraum des Gehäuses abgewandten Seite der Abdeckung befinden. Infolge der so gebildeten axialen Magnetkupplung zwischen Flügelrad und Mittelachse wird die Mittelachse zusammen mit dem Flügelrad gedreht, so daß die ein Maß für die durch das Gehäuse geströmte Wassermenge darstellende Drehung des Flügelrades eine entsprechende Anzeige im Zählwerk bewirkt. Die bei dem bekannten Wasserzähler vorhandenen Lagerbuchsen werden im Betrieb von Wasser umströmt, das mittels zwischen Flügelrad und Achse ausgebildeten Zentrifugalkammern zugeführt wird.

Ein Wasserzähler mit einem derartigen Aufbau hat einen verhältnismäßig hohen Anlaufwert, d.h. eine auswertbare Drehbewegung des Flügelrades ergibt sich erst bei einer Durchflußmenge von etwa 10 L/h, was im wesentlichen auf die verhältnismäßig große Lagerreibung zurückzuführen ist, die durch die Verwendung von zwei Radialkräfte aufnehmenden Lagern und einem Axialkräfte aufnehmendem Lager an der "nassen" Seite sowie durch die Lagerung der Permanentmagneten tragenden Mittelachse an der "trockenen" Seite Lager entstehen, wobei auf die Mittelachse infolge der Kräfte der Magnetkupplung erhebliche axiale Kräfte wirken. Im übrigen können die so gelagerten Bauteile Lagergeräusche verursachen.

Ferner besteht bei den Radialkräfte aufnehmenden Lagern an der "nassen" Seite die Gefahr, daß diese infolge von Ablagerungen aus dem Wasser zuwachsen und dadurch das Flügelrad blockieren. Insbesondere kann es aber an der Abdeckung im Bereich der Magnetkupplung zu Magnetit-Ablagerungen kommen, d.h. von im Wasser transportierten Teilchen, die von den auf der Mittelachse sitzenden Permanentmagneten angezogen wurden. Hierdurch wird das koppelnde Magnetfeld geschwächt, und es kann zu einem Abreißen der Kupplung kommen, so daß die Mittelachse nicht mehr angetrieben wird. Ferner können auf der Abdeckung Beschädigungen durch Einschleifungen auftreten.

Eine gewisse Verbesserung des Anlaufwertes eines Wasserzählers läßt sich dadurch erreichen, daß man statt der vorstehend beschriebenen Magnetkupplung eine Flügelradabtastung vorsieht, bei der eine am Flügelrad befestigte Metallplatte bei Drehung des Flügelrades an einem induktiven Sensor vorbeigeführt wird, der an der dem Innenraum des Gehäuses abgewandten Seite der Abdeckung liegt und mit einer Auswerteschaltung verbunden ist, die die durch den Vorbeilauf der erzeugten Impulse zählt. Bei diesem Aufbau ergibt sich infolge der nicht vorhandenen Magnetkupplung eine geringere Belastung der Lager, so daß der Wasserzähler bereits bei einer Durchflußmenge von 2 bis 3 L/h anläuft. Darüber hinaus kann dieser Wasserzähler nicht so einfach durch von außen wirkende Magnetkräfte beeinflußt werden.

Der Aufbau eines Wasserzählers mit Flügelradabtastung ist zur Zeit jedoch noch verhältnismäßig teuer und hat insbesondere den Nachteil, daß für den Betrieb der Auswerteschaltung eine Batterie benötigt wird, die infolge ihrer begrenzten Lebensdauer nach einer bestimmten Zeit ausgetauscht und zudem verhältnismäßig umständlich entsorgt werden muß.

Schließlich ist ein Durchflußmesser bekannt (DE-A-3 538 514), der in Eingriff miteinander stehende Meßräder aufweist, von denen eines drehbar auf einer Hohlachse sitzt und sich parallel zu dieser erstreckende Stabmagnete trägt. In die Hohlachse erstreckt sich eine Sonde zur Erzeugung von Impulsen entsprechend der Drehbewegung der Stabmagneten und somit entsprechend der Drehung des zugehörigen Meßrades.

Abgesehen von dem verhältnismäßig guten Schutz der Sonde gegen Beeinflussung von außen, sind bei diesem bekannten Durchflußmesser die vorstehend bereits erläuterten Nachteile vorhanden.

Es ist Aufgabe der Erfindung, einen einfach aufgebauten Fluidzähler, insbesondere Wasserzähler zu schaffen, der einen niedrigen Anlaufwert hat.

Zur Lösung dieser Aufgabe wird ein Fluidzähler der eingangs erwähnten Art erfindungsgemäß derart ausgestaltet, daß das Flügelrad durch ein einziges Lager mit einem flügelradseitigen und einem anderen Lagerteil gestützt ist, dessen flügelradseitiges Lagerteil am der Abdeckung entfernten Ende des Flügelrades vorgesehen ist, daß am Flügelrad zusätzlich Schaufelflächen zum Transport von Fluid entlang der Achse in Richtung der der Abdeckung zugewandten Seite des Flügelrades vorgesehen sind, daß der Innendurchmesser der in Umfangsrichtung geschlossenen Wandung des Flügelrades größer als der Außendurchmesser der Achse in diesem Bereich ist, so daß ein Ringraum zwischen Achse und Flügelrad gebildet wird, der mit dem die Schaufelflächen aufnehmenden Bereich des Innenraums in Verbindung steht und an der der Abdeckung nahen Seite mindestens eine Öffnung aufweist, und daß die Weite des Ringraums am den Schaufelflächen näheren Ende größer ist als in einem der Abdeckung näheren Bereich.

Bei dem erfindungsgemäßen Fluidzähler, der als Gaszähler und als Flüssigkeitszähler eingesetzt werden kann, jedoch vorzugsweise als Wasserzähler dient, stützt sich das Flügelrad über das an ihm vorgesehene Lagerteil im wesentlichen nur in axialer Richtung ab. Die seitliche bzw. radiale Abstützung wird im wesentlichen dadurch erreicht, daß bei Drehung des Flügelrades Fluid, etwa Wasser zwischen Flügelrad und Achse strömt und infolge der Form des vom Fluid durchströmten Ringraums zwischen Achse und Flügelrad im Ringraum einen stabilisierenden Fluiddruck aufbaut, durch den das Flügelrad bezüglich der Achse positioniert gehalten wird, so daß sich das Flügelrad unter Wirkung des durch das Gehäuse strömenden Fluids ohne nennenswerte Lagerreibung und ohne Berührung von Flügelrad und stationärer Achse drehen kann.

Bei dem erfindungsgemäßen Fluidzähler erhält man somit einen besonders niedrigen Anlaufwert, weil lediglich ein einziger mechanischer Lagerbereich vorgesehen ist, der zudem im wesentlichen nur eine axiale Abstützung bewirkt. Da sich darüber hinaus infolge des Fehlens der sonst vorhandenen Lager eine allein durch den Fluidstrom bestimmte Positionierung des Flügelrades bezüglich der Achse ergibt, erhält man über den gesamten Meßbereich einen geradlinigen Verlauf der Fehlerkurve des Fluidzählers. Zudem kann es im dem Lagenbereich entfernten Bereich zwischen Achse und Flügelrad nicht ohne weiteres zu Ablagerungen kommen.

Die seitliche Abstützung des Flügelrades kann noch dadurch verbessert werden, daß der mindestens eine Permanentmagnet eine gleichmäßig in Umfangsrichtung verteilte Anordnung von Magnetpolen bildet und daß der mindestens eine Permanentmagnet und das Gegenelement auf gleicher axialer Höhe und im axialen Abstand vom Anschluß der Achse an die Abdeckung angeordnet sind. Die Magnetpolverteilung kann durch einen Ringmagneten gebildet sein, der zwei einander diametral gegenüberliegende Magnetpole entgegengesetzter Polarität bildet, jedoch auch durch einzelne Magnetelemente. Vorzugsweise trägt das Flügelrad mindestens drei gleichmäßig in Umfangsrichtung verteilt angeordnete Permanentmagneten.

Durch die auf diese Weise ausgebildete Form des Magnetfeldes wird die seitliche Abstützung des Flügelrades zusätzlich unterstützt.

Während bei dem bekannten Aufbau eines Wasserzählers die im Zählwerk vorgesehenen Permanentmagnete, die mit den Permanentmagneten des Flügelrades eine axiale Magnetkupplung bilden, verhältnismäßig ungeschützt liegen, so daß es möglich ist, mit einem starken Magnetfeld von außen auf diese Permentmagneten einzuwirken und so beispielsweise die Drehung der die Permanentmagneten tragenden Mittelachse des Zählwerks gegenüber dem Flügelrad zu verlangsamen oder vollständig zu blockieren, weist ein in der vorstehenden Weise ausgestalteter Fluidzähler eine bezüglich der Drehachse des Flügelrades radiale Anordnung von Magnetpolen am Flügelrad und Gegenelement auf, wobei sich der Permanentmagnet bzw. die Permanentmagneten des Flügelrades, die die Magnetpole bilden, im Innenraum des Gehäuses befinden und daher auch ohne zusätzliche Maßnahmen in erheblichem Maße gegen die Beeinflussung durch äußere Magnetfelder geschützt wird bzw. werden, während das Gegenelement, das beispielsweise durch mindestens einen Permanentmagneten gebildet sein kann und dann zusammen mit dem bzw. den Permanentmagneten des Flügelrades eine radiale Magnetkupplung bildet, von den Magnetpolen des Flügelrades umgeben ist, die eine Art Abschirmung bilden.

Es ist zwar auch bereits bekannt, bei Wasserzählern eine radiale Anordnung einer Magnetkupplung vorzusehen. Hierbei handelt es sich jedoch nicht um Wasserzähler, bei denen der durch das Gehäuse fließende Wasserstrom ein Flügelrad o.ä. anströmt und dadurch in Drehbewegung versetzt, sondern um sogenannte Ringkolbenzähler. Der in diesen vorhandene Drehkolben blockiert im Stillstand den gesamten Durchtrittsquerschnitt für das Wasser, und seine Drehzahl bestimmt die hindurchgetretene Wassermenge. Eine Beeinflussung des Meßergebnisses durch äußere Magnetfelder und/oder Lagerreibung tritt bei Ringkolbenzählern nicht ein, so daß es sich um Zähler eines völlig anderen Typs handelt als der erfindungsgemäße Zähler.

Als Gegenelement kann in der Achse des erfindungsgemäßen Fluidzählers ein Sensor, etwa ein Hall-Generator, angeordnet sein, der nach Art einer Flügelradabtastung bei jedem Vorbeilauf des bzw.

eines Permanentmagneten einen von der zugehörigen Schaltungsanordnung auswertbaren Impuls erzeugt.

Bevorzugt ist jedoch die Verwendung einer radialen Magnetkupplung zwischen Flügelrad und Zählwerk. Hierzu kann die Achse hohl und am freien Ende geschlossen sein sowie sich aus dem Innenraum des Gehäuses durch die Abdeckung erstrecken. Durch das an der dem Innenraum des Gehäuses abgewandte, offene Ende der Achse kann sich in diese eine drehbar gelagerte Welle erstrecken, die das aus einem oder mehreren Permanentmagneten bestehende Gegenelement trägt. Auf diese Weise wird durch Drehung des Flügelrades und die magnetische Kopplung von dessen Permanentmagnet bzw. Permanentmagneten mit dem oder den Permanentmagneten auf der Welle die Welle entsprechend der Drehung des Flügelrades gedreht und dadurch das Zählwerk betätigt, wobei die magnetische Kopplung vorzugsweise durch Anziehungkräfte zwischen den Permanentmagneten bewirkt wird.

Dabei wird durch den von den Schaufelflächen erzeugten Fluidstrom im Ringraum zwischen Achse und Flügelrad und somit zwischen den Hälften der Magnetkupplung sichergestellt, daß Magnetit-Teilchen u.ä. aus dem Bereich der Magnetkupplung gespült werden, sich also nicht ablagern, wie dies bei bekannten Wasserzählern mit axialer Magnetkupplung geschehen kann.

Um einen zusätzlichen Schutz des Fluidzählers gegen Beeinflussung durch von außen wirkende Magnetfelder zu erreichen, kann im Flügelrad radial außerhalb des mindestens einen Permanentmagneten und auf dessen axialer Höhe eine magnetische Abschirmung, etwa aus Material mit hoher magnetischer Permeabilität vorgesehen sein, die den Durchtritt von Magnetfeldern in Richtung auf den mindestens einen Permanentmagneten verhindert.

Wenn der Fluidzähler so aufgebaut ist, daß sich in zur Abdeckung hin offenen Aussparung des Flügelrades mindestens eine Prallwand erstreckt, kann diese mindestens eine Prallwand eine magnetische Abschirmanordnung, beispielsweise aus Material mit hoher magnetischer Permeabilität tragen, wodurch ebenfalls die Beeinflussung durch von außen wirkende Magnetfelder reduziert bzw. vollständig ausgeschaltet wird.

Da bei dem erfindungsgemäßen Fluidzähler das Magnetfeld der Magnetkupplung nicht mehr durch die Abdeckung zwischen "nassem" und "trockenem" Bereich hindurchzutreten braucht, ist es auch nicht mehr erforderlich, diese aus einem Material niedriger magnetischer Permeabilität, etwa Kunststoff oder Messing herzustellen. Vielmehr kann die Abdeckung aus Material mit magnetischer Permeabilität, etwa Stahl bestehen und dadurch die Abschirmung gegen äußere Magnetfelder dienen.

Die Weite des Ringraums zwischen Flügelrad und Achse kann sich in Richtung auf die Abdeckung kontinuierlich verringern, wobei beispielsweise zumindest der im Bereich des Ringraums liegende Abschnitt der Achse einen kreisförmigen Querschnitt aufweisen kann. Bei einer derartigen Form des Ringraums ergibt sich im Meßbetrieb ein erhöhter Fluiddruck, und das von den Schaufelflächen des Flügelrades durch den Ringraum gedrückte Fluid bewirkt infolge des im Verlauf des Ringraums zunehmenden Drucks eine zuverlässige Ausrichtung des sich drehenden Flügelrades bezüglich der Achse.

Das flügelradseitige Lager kann beispielsweise aus einer in der Mittelachse des Flügelrades an diesem befestigten Lagerkugel bestehen.

Das andere Lagerteil kann an der der Abdeckung gegenüberliegenden Wand des Gehäuses vorgesehen sein, und es kann beispielsweise aus einer eine vertiefte Lagerfläche aufweisenden Lagerschale bestehen, so daß das von einer Lagerkugel gebildete flügelradseitige Lagerteil in der vertieften Lagerfläche umlaufen kann und so eine axiale Abstützung des Flügelrades bewirkt wird, während die radiale Abstützung allein durch das Fluid im Ringraum und zusätzlich durch die in Umfangsrichtung gleichmäßige Verteilung der Magnetpole, also die symmetrischen Magnetkräfte bewirkt wird.

Eine Vereinfachung bei der Montage des Fluidzählers und eine seitliche Positionierung des Flügelrades im Stillstand kann dadurch erreicht werden, daß am freien Ende der Achse ein sich koaxial erstreckender Führstift vorgesehen wird, der sich mit seitlichem Spiel in eine Bohrung im Flügelrad erstreckt, und daß der Bereich zwischen Grund der Bohrung und freiem Ende des Führstiftes über einen seitlichen Kanal mit dem Innenraum des Gehäuses verbunden ist.

Ein derartiger Führstift bewirkt keine axiale Abstützung des Flügelrades, sondern lediglich eine im Stillstand gegebenenfalls erforderliche radiale bzw. seitliche Abstützung. Durch die Zufuhr von Fluid über den seitlichen Kanal wird sichergestellt, daß sich zwischen Grund der Bohrung im Flügelrad und dem freien Ende des Führstifts keine Ablagerungen festsetzen, die die Drehbewegung des Flügelrades beeinträchtigen oder gar vollständig blockieren könnten, und es wird eine Entlüftung erreicht.

In einer anderen Ausbildung kann das andere Lagerteil aus einem sich koaxial zur Mittelachse des Flügelrades erstreckenden Lagerstift bestehen, der sich mit seitlichem Spiel in eine Bohrung im Flügelrad erstreckt, an deren Grund das flügelradseitige Lagerteil, etwa eine Kugel sitzt. Auf diese Weise bewirkt der Eingriff von Lagerstift und flügelradseitigem Lagerteil die axiale Abstützung des Flügelrades. Zusätzlich wird zwischen Wandung der Bohrung im Flügelrad und Lagerstift eine gegebenenfalls im Stillstand erforderliche seitliche Abstützung des Flügelrades bewirkt sowie die Montage des Fluidzählers erleichtert.

Um bei einem derartigen Aufbau die Ablagerung von Teilchen aus dem Fluid, etwa Wasser im Bereich des Lagers zu vermeiden und eine Lagerschmierung zu bewirken, kann der Berührungsbereich von Lagerstift und flügelradseitigem Lagerelement über einen im Flügelrad ausgebildeten Seitenkanal mit dem Innenraum des Gehäuses verbunden sein, über den Fluid in den Berührungsbereich geführt und eine Entlüftung sichergestellt wird.

Der erfindungsgemäße Fluidzähler kann nach Art eines EinstrahlZählers aufgebaut sein. Es ist jedoch auch möglich, daß das Flügelrad von einem im Innenraum des Gehäuses angeordneten, in seiner Wandung Fluiddurchtrittsöffnungen aufweisenden Gehäuseteil umgeben ist, wobei dann das andere Lagerteil an der der Abdeckung gegenüberliegenden Bodenwand des Gehäuseteils vorgesehen ist. Ein solcher Aufbau stellt einen Mehrstrahl-Zähler dar.

In den meisten Einbauzuständen wird das flügelradseitige Lagerteil oberhalb des anderen Lagerteils angeordnet sein, so daß sich das Flügelrad auf dem anderen Lagerteil abstützt.

Es ist jedoch auch möglich, den erfindungsgemäßen Fluidzähler so auszubilden, daß das andere Lagerteil im Einbauzustand oberhalb des flügelradseitigen Lagerteils liegt, wobei sich dann das Flügelrad in der Ruhelage über die Achse abstützt und das flügelradseitige Lagerteil bei Drehung des Flügelrades im Meßbetrieb infolge der dadurch entstehenden axialen Verlagerung des Flügelrades bezüglich der Achse, u.a. durch die auf die Schaufelflächen wirkenden Kräfte, in Eingriff mit dem anderen Lagerteil steht.

Die Erfindung wird im folgenden anhand der schematisch Ausführungsbeispiele in Form von Wasserzählern zeigenden Figuren näher erläutert.

Figur 1 zeigt im Schnitt einen Einstrahl-Wasserzähler.

Figur 2 zeigt in einem vergrößerten Teilschnitt das Flügelrad und den dem Flügelrad benachbarten Bereich des Wasserzählers aus Figur 1.

Figur 3 zeigt einen Schnitt entlang der Linie III-III aus Figur 2, wobei das Gehäuse des Wasserzählers weggelassen ist.

Figur 4 zeigt in einer vergrößerten Seitenansicht das Flügelrad des Wasserzählers aus den Figuren 1 bis 3.

Figur 5 zeigt in einem Teilschnitt entsprechend Figur 2 eine andere Lagerung des Flügelrades.

Figur 6 zeigt in einem Teilschnitt entsprechend Figuren 2 und 5 eine weitere Abwandlung der Lagerung des Flügelrades.

Figur 7 zeigt in einem Schnitt entsprechend Figur 1 einen Mehrstrahl-Wasserzähler.

Figur 8 zeigt in einer Schnittdarstellung entsprechend Figur 1 einen Einstrahl-Wasserzähler mit im Einbauzustand unterhalb des Flügelrades liegenden Zählwerk, wobei sich das Flügelrad in der Darstellung gemäß Figur 8 im Stillstand befindet.

Figur 9 zeigt in einem Teilschnitt entsprechend Figuren 2, 5 und 6 die Lagerung des still stehenden Flügelrades des Wasserzählers gemäß Figur 8.

Figur 10 zeigt in einem Teilschnitt gemäß Figur 9 die Lagerung des Flügelrades im Wasserzähler gemäß Figur 8 bei vom Wasser angetriebenem Flügelrad.

Obwohl die Erfindung nachstehend unter Bezugnahme auf Wasserzähler beschrieben wird, eignet sie sich auch für gasförmige Fluide, da die Lagerreibung sehr gering ist und keine Kühlprobleme auftreten. Ferner ist der Einsatz in Zusammenhang mit anderen Flüssigkeiten als Wasser möglich.

Es sei darauf hingewiesen, daß in den verschiedene Ausführungsbeispiele zeigenden Figuren gleiche bzw. einander entsprechende Teile mit gleichen, jedoch von Ausführungsbeispiel zu Ausführungsbeispiel um 100 erhöhten Bezugszeichen bezeichnet sind. Es werden daher nicht zu jedem Ausführungsbeispiel alle bereits in Zusammenhang mit einem vorhergehenden Ausführungsbeispiel beschriebenen Teile erneut beschrieben, und bereits beschriebene und bezeichnete Teile sind in nachfolgenden Ausführungsbeispielen nicht immer mit Bezugszeichen gekennzeichnet, wenn ihre Form, Lage und Funktion mit derjenigen aus einem vorhergehenden Ausführungsbeispiel übereinstimmt.

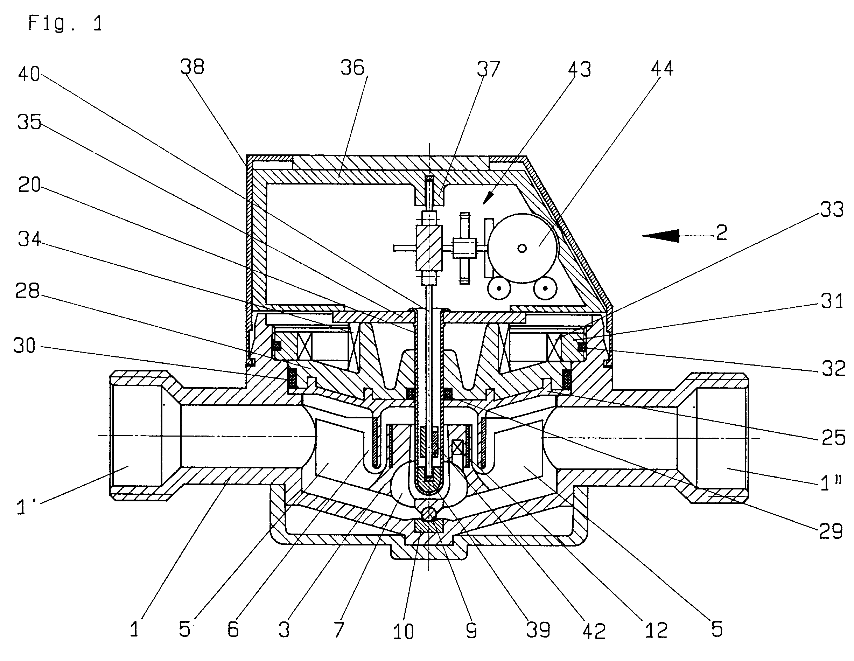

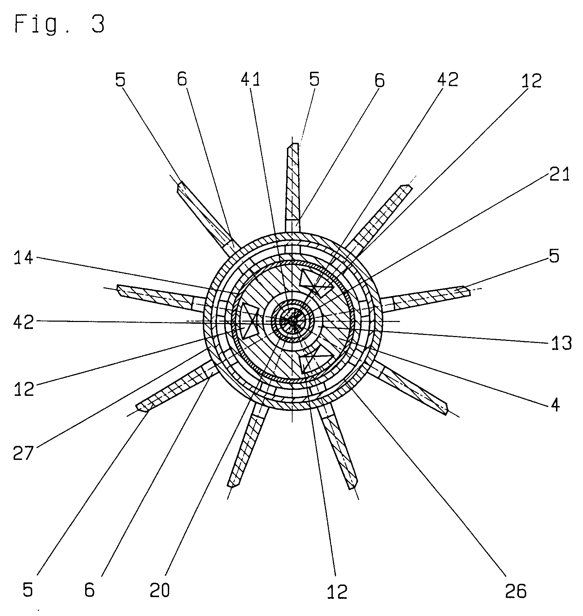

In den Figuren 1 bis 4 ist ein Wasserzähler mit einschließlich verschiedener Einzelteile dargestellt, der ein T-förmiges Gehäuse 1 hat, an dessen Anschluß 1' das Wasser zugeführt wird und aus dessen Anschluß 1'' das Wasser abfließt. Die Mittelöffnung des Gehäuses 1 ist mittels einer beispielsweise aus Edelstahl bestehenden Abdeckung 25 verschlossen, die mit Hilfe einer an ihrer Außenseite liegenden Stützplatte 28 und einem Gewindering 31 in ihrer Lage gehalten wird, wobei im äußeren Randbereich von Stützplatte 28 und Gewindering 31 eine Ringdichtung 30 bzw. ein Verdrehschutz 32 für den Gewindering 31 (DE-PS 36 13 711) vorhanden sind. Mittig durch die Abdeckung 25 und die Stützplatte 28 erstreckt sich eine hohle Achse 20, die im Bereich des Durchtritts durch die Abdeckung 25 mittels einer Ringdichtung 29 abgedichtet ist und deren im Innenraum des Gehäuses 1 liegendes Ende geschlossen ist. Das in Figur 1 obere Ende der Achse 34 steht in axial unverlagerbarem Eingriff mit einer Halteplatte 35, die mittels eines aufgesetzten Zählergehäuseteils 36 und einer das Zählergehäuseteil 36 übergreifenden Abdeckkappe 38 fest auf einer Ringrippe der Stützplatte 28 positioniert ist.

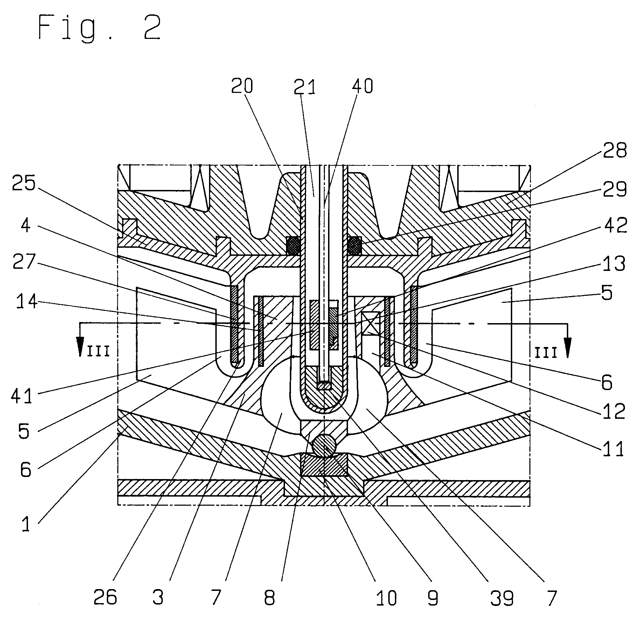

Das im Bereich der Halteplatte 35 liegende Ende der Achse 20 ist offen, und durch diese Öffnung erstreckt sich in die Achse 20 eine Welle 40, die in einer Lageranordnung 39 im geschlossenen Ende der Achse 20 und in einem Lagervorsprung 37 an der Innenseite des Zählergehäuseteils 36 drehbar gelagert ist. Im Bereich des Innenraums des Zählergehäuseteils 36 befindet sich auf der Welle 40 ein Schneckenrad, das in Eingriff mit einer schematisch angedeuteten, für derartige Wasserzähler üblichen Übersetzung 43 steht und über diese eine Rollenzählwerkanordnung 44 treibt. Das so gebildete Zählwerk 2 wird in zu beschreibender Weise durch Drehung der Welle 40 angetrieben. Hierzu sitzt im Innenraum 21 der Achse 20 nahe der Lageranordnung 39 ein Buchsenelement 41, das drei gleichmäßig in Umfangsrichtung verteilte, sogenannte Gegenelemente bildende Permanentmagneten 42 trägt, die alle gleichen radialen Abstand von der Mittelachse der Welle 40 haben. Wie insbesondere den Figuren 1 und 2 zu entnehmen ist, befindet sich das Buchsenelement 41 im Bereich desjenigen Abschnittes der Achse 20, der über die Abdeckung 25 in den Innenraum des Gehäuses 1 vorsteht, wobei zwischen dem der Achse 20 benachbarten Bereich der Abdeckung 25 und dem Buchsenelement 41 ein axialer Abstand besteht.

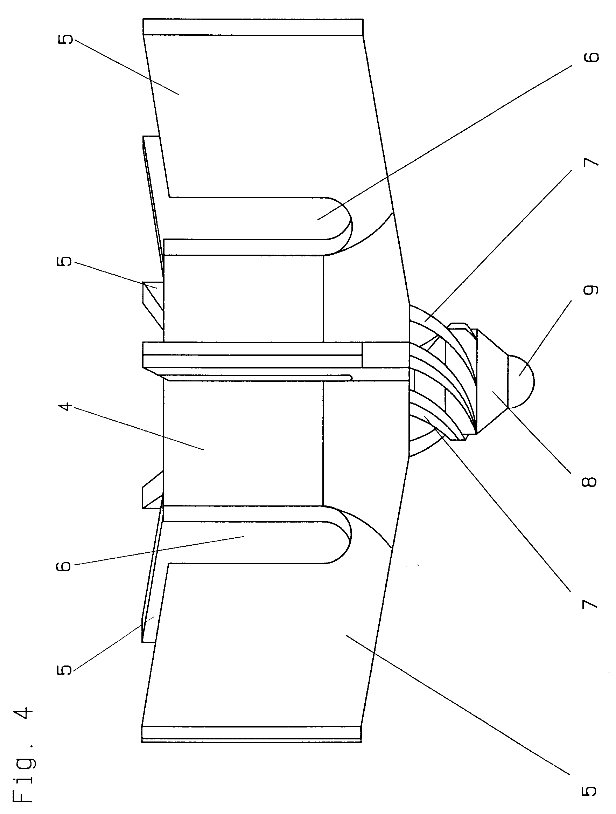

Koaxial zur Achse 20 befindet sich im Innenraum des Gehäuses 1 ein Flügelrad 3, das von dem Wasser, das vom Anschluß 1' durch den Innenraum des Gehäuses 1 zum Anschluß 1'' fließt, tangential angeströmt wird, so daß es infolge der Beaufschlagung seiner Flügel 5 eine Drehbewegung ausführt. Das Flügelrad 3 ist koaxial zur Achse 20 im Innenraum des Gehäuses 1 angeordnet und umgibt das sich in diesen Innenraum erstreckende Ende der Achse 20 im Abstand. An der Unterseite des Flügelrades 3 sitzt in einem mittigen Halteabschnitt 8 eine Lagerkugel 9, mit der sich das Flügelrad 3 auf einer vertieften Lagerfläche einer Lagerschale 10 abstützt, die an der der Abdeckung 25 gegenüberliegenden Seite in der Wandung des Gehäuses 1 befestigt ist. Vom Halteabschnitt 8 des Flügelrades 3 erstrecken sich gekrümmte Schaufelflächen 7, deren Form und Anordnung insbesondere in Figur 4 zu erkennen ist. Die oberen äußeren Ränder der Schaufelflächen 7 gehen in einen Nabenteil 4 des Flügelrades 3 über, das eine sich von den Schaufelflächen 7 in Richtung auf die Abdeckung 25 verjüngende Mittelöffnung aufweist, so daß zwischen Nabenteil 4 und der einen kreisförmigen Durchmesser aufweisenden Achse 20 ein Ringraum 13 gebildet wird, dessen Weite von den Schaufelflächen 7 zum der Abdeckung 25 näheren Ende kontinuierlich abnimmt.

Im Nabenteil 4 sind drei auf einem konzentrischen Kreis um die Mittelachse des Flügelrades 3 sowie gleichmäßig in Umfangsrichtung verteilte Vertiefungen 11 vorhanden, in die Permanentmagneten 12 eingesetzt sind, wie dies für Wasserzähler mit Magnetkupplungen an sich üblich ist. Die Permanentmagneten 12 befinden sich auf im wesentlichen gleicher axialer Höhe wie die Permanentmagneten 42 auf der Welle 40 im Innenraum 21 der Achse 20, d.h. die Permanentmagneten 12 des Flügelrades 3 umgeben die Permanentmagneten 42 auf der Welle 40 und bilden mit diesen eine Magnetkupplung.

Im Übergangsbereich vom Nabenteil 4 zu den Flügeln 5 des Flügelrades 3 sind in den Flügeln 5 auf einem konzentrischen Kreis um die Mittelachse des Flügelrades 3 angeordnete, zur Abdeckung 25 hin offene Aussparungen 6 vorhanden, in die sich eine einen Teil der Abdeckung 25 bildende, aus dieser in den Innenraum des Gehäuses 1 vorstehende, kreisförmige Prallwand 26 erstreckt. Die Prallwand 26 endet etwas unterhalb der oberen Enden der Schaufelflächen 7.

Im den Aussparungen 6 benachbarten Randbereich des Nabenteils 4 ist in diesen eine ringförmige Abschirmung 14 eingelagert, die aus einem Material sehr hoher magnetischer Permeabilität, etwa Weicheisen besteht. Auch in die Außenseite der Prallwand 26 ist eine ringförmige Abschirmanordnung 27 eingelassen, die ebenfalls aus einem Material mit hoher magneteischer Permeabilität, etwa Weicheisen bestehen kann. Sowohl die Abschirmung 14 als auch die Abschirmanordnung 27 befinden sich auf gleicher axialer Höhe wie die Permanentmagneten 12 und die Permanentmagneten 24, erstrecken sich jedoch in beiden axialen Richtungen noch über diese hinaus.

Ist der dargestellte Wasserzähler in den Verlauf einer Wasserleitung eingesetzt und ist das in dieser befindliche Wasser nicht in Bewegung, so befindet sich das Flügelrad 3 im Stillstand, in dem seine Lagerkugel 9 auf der Lagerfläche des Lagerteils 10 ruht und im Ringraum 13 zwischen Achse 20 und Nabenteil 4 des Flügelrades 3 Wasser vorhanden ist, das zusammen mit der Wirkung des infolge der gleichmäßigen Verteilung von Permanentmagneten 12 und 42 in Umfangsrichtung etwa gleichförmigen Magnetfeldes die Wandung des Flügelrades 3 im Abstand von der Achse 20 hält.

Sobald das Wasser im Innenraum des Gehäuses 1 durch Zufuhr von weiterem Wasser über den Anschluß 1' in Bewegung gerät, beginnt sich das Flügelrad 3 zu drehen, wobei bereits geringe Strömungsbewegungen für die Einleitung der Drehbewegung ausreichen, da sich das Flügelrad 3 lediglich über die in axialer Richtung belastete Lagerkugel 9 auf der Lagerschale 10 abstützt und dadurch nur eine geringe Reibung auftritt. Der das Flügelrad 3 beaufschlagende Teil des Wassers strömt im wesentlichen durch den unteren Teil des Gehäuses 1, da der obere Teil durch die Prallwand 26 abgedeckt wird, so daß das Wasser dort die Außenseite der Prallwand 26 tangential umströmt und kein radiale oder seitliche Kräfte auf den oberen Teil des Flügelrades 3 ausübender Wasserstrom auf dieses auftrifft. Die Drehbewegung des Flügelrades 3 bewirkt, daß die entsprechend gekrümmten Schaufelflächen 7 einen Teil des Wassers nach innen und oben leiten, so daß ein Wasserstrom um die Achse 20 und durch den Ringraum 13 zwischen Achse 20 und Nabenteil 4 des Flügelrades 3 fließt, der umso stärker wird, je höher die Drehzahl des Flügelrades 3 ist. Da sich die Weite des Ringraums 13 von den Schaufelflächen 7 zum Austrittsende des Ringraums verringert, baut sich in diesem Ringraum ein zusätzlicher Druck auf, durch den das Flügelrad 3 koaxial um die Achse 20 positioniert gehalten wird.

Infolge der Magnetkupplung zwischen den Permanentmagneten 12 im Flügelrad 3 und den Permanentmagneten 42 auf der Welle 40 wird die Welle 40 bei Drehung des Flügelrades 3 in genau zugeordneter Weise ebenfalls gedreht und so über die Kupplung 43 des Zählwerkes 2 das Rollenzählwerk 44 betätigt.

Da bei dem gezeigten Aufbau die im Flügelrad 3 befindlichen Permanentmagneten 12 auf gleicher axialer Höhe wie die Permanentmagneten 42 auf der anzutreibenden Welle 40 liegen und die Permanentmagneten 42 umgeben, ist an sich bereits ein wirksamer Schutz gegen die Beeinflussung der Bewegung der Welle 40 durch von außen angelegte Magnetfelder gegeben. Dieser Schutz wird noch dadurch erheblich verstärkt, daß die Magnetkupplung aus Permanentmagneten 12 und Permanentmagneten 42 in der dargestellten Weise von der ringförmigen Abschirmung 14 und der ringförmigen Abschirmanordnung 27 aus Materialien hoher magnetischer Permeabilität umgeben und die Stützplatte 28 beispielsweise aus Stahl o.ä. hergestellt ist, so daß praktisch keine Möglichkeit besteht, die Funktion des Wasserzählers durch das Anlegen von äußeren Magnetfeldern zu stören bzw. zu beeinflussen. Es sei erwähnt, daß in der in Figur 1 angedeuteten Weise an der Unterseite des Gehäuses 1 eine weitere, nicht bezeichnete magnetische Abschirmung angebracht sein kann.

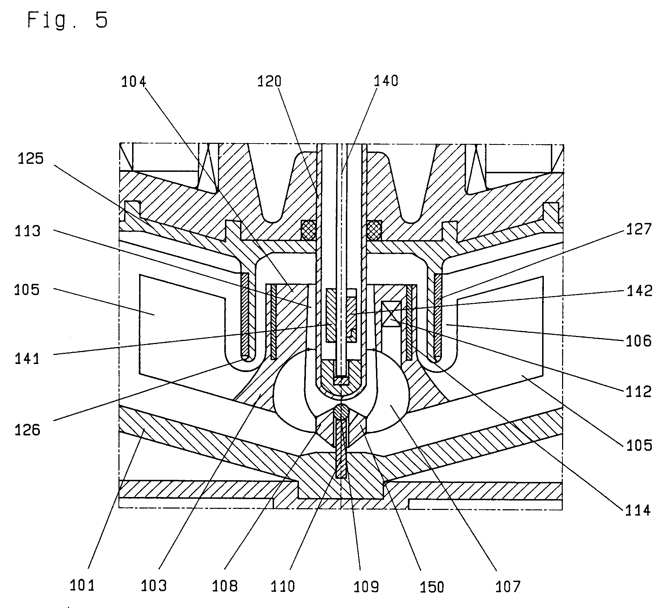

Der Wasserzähler gemäß Figur 5 unterscheidet sich von demjenigen gemäß Figuren 1 bis 4 lediglich durch die Ausbildung des Lagers für das Flügelrad 103. Dieses Lager wird von einer Lagerkugel 109 und einem Lagerstift 110 gebildet. Die Lagerkugel 109 ist am Grund einer Bohrung im Halteabschnitt 108 des Flügelrades 103 befestigt und liegt auf der Mittelachse des Flügelrades 103. Die Lagerkugel 9 wird mittels des koaxial angeordneten, sich mit seitlichem Spiel in die Bohrung erstreckenden Lagerstiftes 110 abgestützt, der in der der Abdeckung 125 gegenüberliegenden Wandung des Gehäuses 101 befestigt ist. An der Oberseite des Halteabschnittes 108 ist ein Seitenkanal 150 ausgespart, der den Berührungsbereich von Lagerkugel 109 und Lagerstift 110 mit dem Innenraum des Gehäuses 101 verbindet, so daß diesem Berührungsbereich im Betrieb Wasser zugeführt wird, durch das Ablagerungen weggeschwemmt sowie eine Entlüftung und eine Schmierung bewirkt wird.

Wie ohne weiteres zu erkennen ist, dient der Lagerstift 110 nicht nur zur axialen Abstützung der Lagerkugel 109 und damit des Flügelrades 103, sondern er kann im Stillstand auch eine seitliche Führung des Flügelrades 103 bilden.

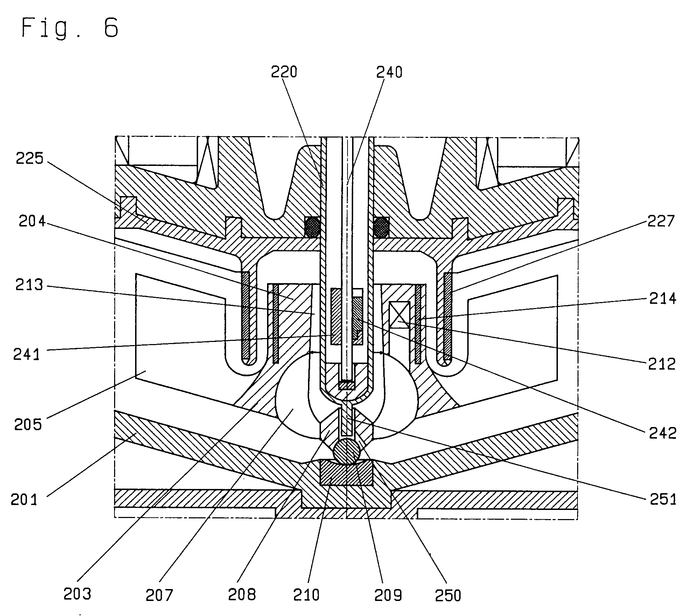

Eine andere Art einer zusätzlichen seitlichen Führung des Flügelrades im Stillstand ist in Figur 6 dargestellt. Bei diesem Wasserzähler, dessen Lager in seinem Aufbau demjenigen aus den Figuren 1 bis 4 entspricht, ist im Halteabschnitt 208 des Flügelrades 203 an der Lagerschale 210 abgewandten Seite der Lagerkugel 209 eine in der Mittelachse des Flügelrades 203 liegende Bohrung vorhanden, in die sich mit seitlichem Spiel ein am freien Ende der Achse 220 vorgesehener Führstift 251 erstreckt, der koaxial zur Mittelachse der Achse 220 verläuft und dessen freies Ende in geringem Abstand von der Lagerkugel 209 liegt. Benachbart zur Lagerkugel 209 ist im Halteabschnitt 208 ein seitlicher Kanal 250 ausgebildet, der das Innere der im Halteabschnitt 208 ausgebildeten Bohrung und insbesondere den Bereich zwischen freiem Ende des Führstiftes 251 und Lagerkugel 209 mit dem Inneren des Gehäuses 201 verbindet, so daß im Betrieb durch den seitlichen Kanal 250 in die Bohrung eintretendes Wasser Ablagerungen weggeschwemmt sowie eine Entlüftung und eine Schmierung bewirkt.

Der Führstift 251 verursacht keine Erhöhung der Reibung, da das Flügelrad 203 im wesentlichen nur durch die Lagerkugel 209 axial abgestützt wird, während eine seitliche Abstützung durch Berührung von Führstift 251 und Wandung der Bohrung im Halteabschnitt 208 nur im Stillstand eintritt. Der Führstift 251 erleichtert darüber hinaus die Montage des Wasserzählers.

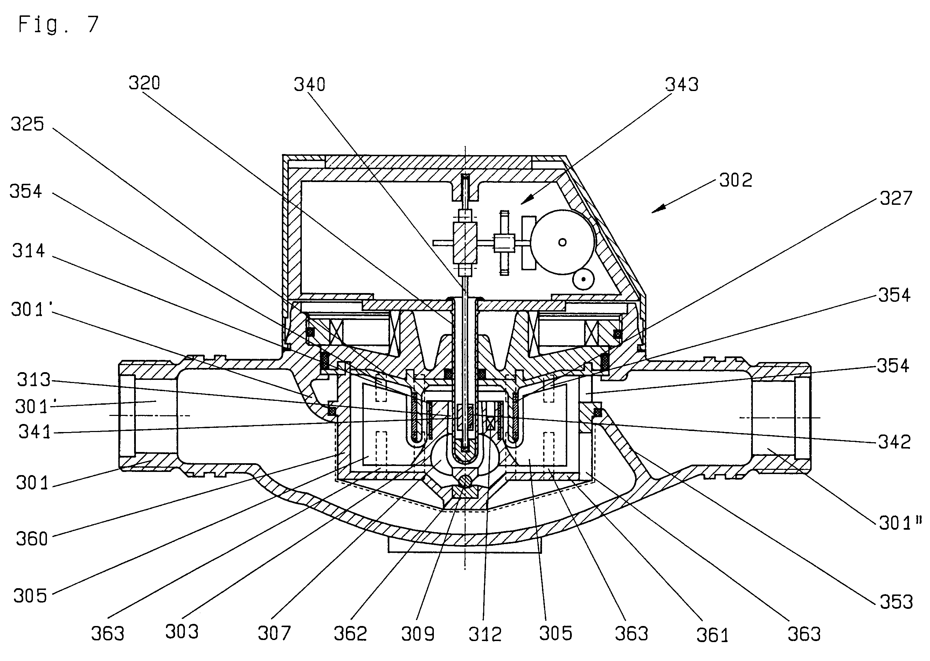

Die vorstehend beschriebenen Ausführungsbeispiele sind in der Form von Einstrahl-Wasserzählern aufgebaut. In Figur 7 ist ein Mehrstrahl-Wasserzähler dargestellt.

Bei dem Mehrstrahl-Wasserzähler gemäß Figur 7 ist in für Mehrstrahl-Wasserzähler an sich üblicher Weise in eine eine Mittelöffnung bildende Trennwand 253 im Gehäuse 301 ein das Flügelrad 303 umgebendes Gehäuseteil 360 eingesetzt, das an der Oberseite durch die Abdeckung 325 verschlossen wird und das an der Unterseite eine geschlossene Bodenwand 361 aufweist. An der Unterseite des Gehäuseteils 360 ist eine Siebanordnung angedeutet, die zusätzlich auch eine magnetische Abschirmung bilden kann. Die Bodenwand 363 des Gehäuseteils 360 nimmt die Lagerschale 362 auf, in deren Vertiefung sich die Lagerkugel 309 des Flügelrades 303 abstützt.

Wie ohne weiteres zu erkennen ist, entspricht der Aufbau von Flügelrad 303, Lagerung des Flügelrades 303, Achse 320 und Welle 340 demjenigen aus den Figuren 1 bis 4.

Das über den Anschluß 301' in das Gehäuse geleitete Wasser tritt durch die unterhalb der von der Trennwand 353 gebildeten Mittelöffnung in der Umfangswand des Gehäuseteils 360 ausgebildeten Schlitze 363 in das Gehäuseteil 360 ein und bewirkt durch tangentiale Beaufschlagung der Flügel 305 des Flügelrades 303 dessen Drehung. Das Wasser tritt aus dem Gehäuseteil 360 durch die in dessen Umfangswand oberhalb der in der Trennwand 353 ausgebildeten Mittelöffnung vorgesehenen Schlitze 354 aus und gelangt von dort zum Anschluß 301'' des Gehäuses 1 und verläßt an diesem Anschluß das Gehäuse.

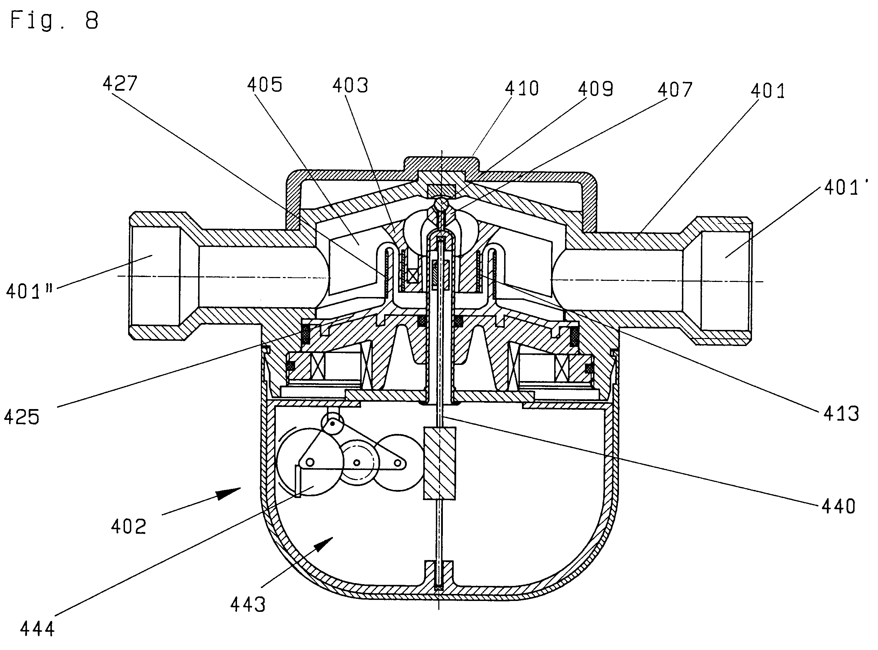

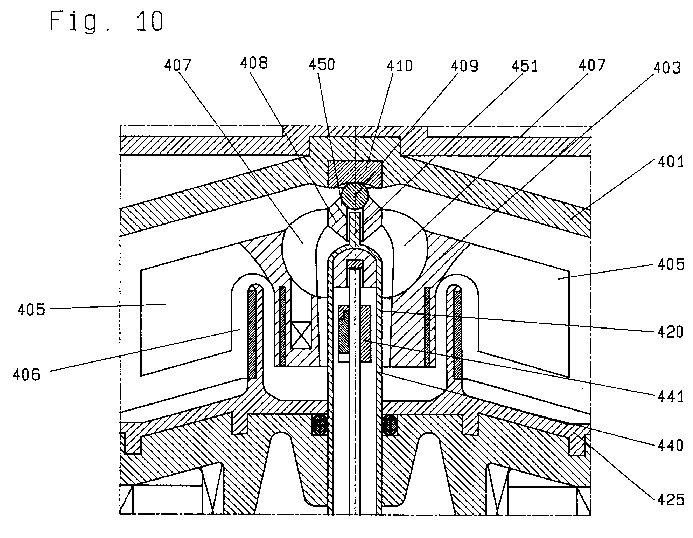

Während die Wasserzähler gemäß Figuren 1 bis 7 für eine Einbaulage mit oben liegendem Zählwerk ausgebildet sind, ist der Wasserzähler gemäß Figuren 8 bis 10 zum Einbau mit unten liegendem Zählwerk geeignet.

Der Wasserzähler gemäß Figuren 8 bis 10 hat einen Aufbau, der im wesentlichen demjenigen der Figuren 1 bis 4, jedoch mit der zusätzlichen Anordnung eines Führstiftes 451 am freien Ende der Achse 420 entsprechende Figur 6.

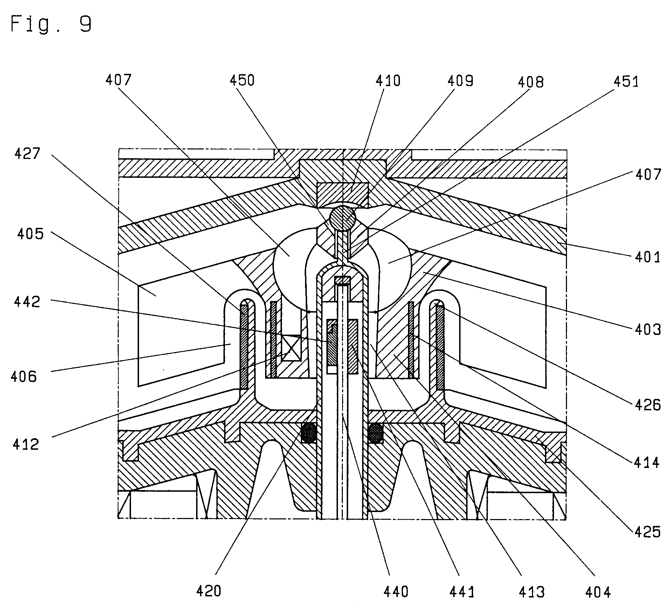

In der Ruhestellung des Flügelrades 403 wird dieses durch Auflage der in seinem Halteabschnitt 408 befestigten Lagerkugel 409 auf dem freien Ende des Führstiftes 451 gehalten (Figur 9), und in dieser Lage befindet sich die Lagerkugel 409 in geringem Abstand von der Lagerfläche der in der der Abdeckung 425 gegenüberliegenden Wandung des Gehäuses 401 befestigten Lagerschale 410.

Sobald das Flügelrad 403 durch Zufuhr von Wasser in Drehbewegung versetzt wird und dadurch die Schaufelflächen 407 Wasser durch den sich in Richtung auf die Abdeckung 425 verengenden Ringraum 413 zwischen Achse 420 und Nabenteil 404 des Flügelrades 403 drücken, wird das Flügelrad 403 durch die dadurch wirkenden Kräfte etwas angehoben, so daß die Lagerkugel 409 vom Führstift 407 freikommt und in Eingriff mit der Lagerfläche der Lagerschale 407 gelangt, an der sie sich dann gegen eine weitere Anhebbewegung axial stützt, wobei nur verhältnismäßig geringe Reibungskräfte auftreten.

In den vorstehend beschriebenen Ausührungsbeispielen wird die vom Wasser erzeugte Drehbewegung des Flügelrades und seiner Permanentmagneten dadurch ausgewertet, daß die Welle des Zählwerks mittels auf ihr angeordneter und mit den Permanentmagneten des Flügelrades magnetisch gekoppelter Permanentmagneten gedreht wurde. Es ist jedoch selbstverständlich auch möglich, in der hohlen Achse statt einer drehbaren Permanentmagneten tragenden Welle lediglich eine Halterung für einen Sensor, etwa einem Hall-Generator, vorzusehen, der sich auf axial gleicher Höhe mit den Permnentmagneten des Flügelrades befindet und mit dessen Hilfe bei Vorbeilauf der Permanentmagneten des Flügelrades Impulse erzeugt werden, die einer Schaltungsanordnung des Zählwerks zugeführt und in eine Anzeige betätigende Impulse umgesetzt werden.

**Patentansprüche**

1.  Fluidzähler, insbesondere Wasserzähler mit einem im vom Fluid zu durchströmenden Innenraum seines Gehäuses (1; 101; 201; 301; 401) angeordneten, tangential anzuströmenden Flügelrad (3; 103; 203; 403), das mindestens einen mit ihm umlaufenden, mit einem Gegenelement (42; 142; 242; 342; 442) des Zählwerkes (2; 302; 402) zusammenwirkenden Permanentmagneten (12; 112; 212; 412) trägt und das um eine Achse (20; 120; 220; 420) drehbar ist, die sich von der das Zählwerk (2; 302; 402) vom Innenraum des Gehäuses (1; 101; 201; 301; 401) trennenden Abdeckung (25; 125; 225; 325; 425) in den Innenraum erstreckt und mit ihrem freien Ende im Abstand von der der Abdeckung (25; 125; 225; 325; 425) gegenüberliegenden Wandung des Gehäuses (1; 101; 201; 401) liegt, wobei das Flügelrad (3; 103; 203; 303; 403) die Achse (20, 120, 220; 320; 420) im von deren freien Ende entfernten Bereich mit einer in Umfangsrichtung geschlossenen Wandung umgibt und Wasser in axialer Richtung zwischen Achse (20; 120; 220; 320; 420) und Flügelrad (3; 103;203; 303; 403) transportiert wird, **dadurch gekennzeichnet**, daß das Flügelrad (3; 103; 203; 303; 403) durch ein einziges Lager (9, 10; 109, 110; 209, 210; 309, 362; 409, 410) mit einem flügelradseitigen und einem anderen Lagerteil gestützt ist, dessen flügelradseitiges Lagerteil (9; 109; 209; 309; 409) am der Abdeckung (25; 125; 225; 325; 425) entfernten Ende des Flügelrades (3; 103; 203; 303; 403) vorgesehen ist, daß am Flügelrad (3; 103; 203; 303; 403) zusätzliche Schaufelflächen (7; 107; 207; 307; 407) zum Transport von Fluid entlang der Achse (20; 120; 220; 320; 420) in Richtung der der Abdeckung (25; 125; 225; 325; 425) zugewandten Seite des Flügelrades (3; 103; 203; 303; 403) vorgesehen sind, daß der Innendurchmesser der in Umfangsrichtung geschlossenen Wandung des Flügelrades (3; 103; 203; 303; 403) größer als der Außendurchmesser der Achse (20; 120; 220; 320; 420) in diesem Bereich ist, so daß ein Ringraum (13; 113; 213; 313; 413) zwischen Achse (20; 120; 220; 320; 420) und Flügelrad (3; 103; 203; 303; 403) gebildet wird, der mit dem die Schaufelflächen (7; 107; 207; 307; 407) aufnehmenden Bereich des Innenraums in Verbindung steht und an der der Abdeckung (25; 125; 225; 325; 425) nahen Seite mindestens eine Öffnung aufweist, und daß die Weite des Ringraums am den Schaufelflächen (7; 107; 207; 307; 407) näheren Ende größer ist als in einem der Abdeckung (25; 125; 225; 325; 425) näheren Bereich.

2. Fluidzähler nach Anspruch 1, **dadurch gekennzeichnet**, daß der mindestens eine Permanentmagnet eine gleichmäßig in Umfangsrichtung verteilte Anordnung von Magnetpolen bildet und daß der mindestens eine Permanentmagnet (12; 112; 212; 312; 412) und das Gegenelement (42; 142; 242; 342; 442) auf gleicher axialer Höhe und im axialen Abstand vom Anschluß der Achse (20; 120; 220; 420) an der Abdeckung (25; 125; 225; 325; 425) angeordnet sind.

3. Fluidzähler nach Anspruch 2, **dadurch gekennzeichnet**, daß das Flügelrad (5) mindestens drei gleichmäßig in Umfangsrichtung verteilt angeordnete Permanentmagneten (12) trägt.

4. Fluidzähler nach Anspruch 2 oder 3, **dadurch gekennzeichnet**, daß die Achse (20; 120; 220; 320; 420) hohl und am freien Ende geschlossen ist, daß die Achse (20; 120; 220; 320; 420) sich aus dem Innenraum des Gehäuses (1; 101; 201; 301; 401) durch die Abdeckung (25; 125; 225; 325; 425) erstreckt und daß sich durch das an der dem Innenraum des Gehäuses (1; 101; 201; 301; 401) abgewandte, offene Ende der Achse (20; 120; 220; 320; 420) in diese eine drehbar gelagerte Welle (40; 140;

240; 340; 440) erstreckt, die das aus einem Permanentmagneten bestehende Gegenelement (12; 112; 212; 312; 412) trägt.

5. Fluidzähler nach einem der Ansprüche 2 bis 4, **dadurch gekennzeichnet**, daß im Flügelrad (5; 105; 205; 305; 405) radial außerhalb des mindestens einen Permanentmagneten (12; 112; 212; 312; 412) und auf dessen axialer Höhe eine magnetische Abschirmung (14; 114; 214; 314; 414) vorgesehen ist.

6. Fluidzähler nach Anspruch 5, **dadurch gekennzeichnet**, daß die magnetische Abschirmung (14; 114; 214; 314; 414) aus einem Material mit hoher magnetischer Permeabilität besteht.

7. Fluidzähler nach einem der Ansprüche 1 bis 6, **dadurch gekennzeichnet,** daß sich in zur Abdeckung (25; 125; 425) hin offene Aussparungen (6; 106; 406) des Flügelrades (3; 103; 403) mindestens eine Prallwand (26; 126; 426) erstreckt und daß die mindestens eine Prallwand (26; 126; 426) eine magnetische Abschirmanordnung (27; 127; 427) trägt.

8. Fluidzähler nach Anspruch 7, **dadurch gekennzeichnet**, daß die magnetische Abschirmanordnung (27; 127; 427) aus einem Material mit hoher magnetischer Permeabilität besteht.

9. Fluidzähler nach einem der Ansprüche 1 bis 8, **dadurch gekennzeichnet**, daß sich die Weite des Ringraums (13; 113; 213; 313; 413) zwischen Flügelrad (3; 103; 203; 303; 403) und Achse (20; 120; 220; 320; 420) in Richtung auf die Abdeckung (25; 125; 225; 325; 425) kontinuierlich verringert.

10. Fluidzähler nach Anspruch 9, **dadurch gekennzeichnet**, daß zumindest der im Bereich des Ringraums (13; 113; 213; 313; 413) liegende Abschnitt der Achse (20; 120; 220; 320; 420) einen kreisförmigen Querschnitt aufweist.

11. Fluidzähler nach einem der Ansprüche 1 bis 10, **dadurch gekennzeichnet**, daß das flügelradseitige Lagerteil (9; 109; 209; 309; 409) aus einer in der Mittelachse des Flügelrades (3; 103; 203; 303; 403) an diesem befestigten Lagerkugel besteht.

12. Fluidzähler nach einem der Ansprüche 1 bis 11, **dadurch gekennzeichnet**, daß das andere Lagerteil (10; 110; 210; 410) an der der Abdeckung (25; 125; 225; 425) gegenüberliegenden Wand des Gehäuses (1; 101; 201;

401) vorgesehen ist.

13. Fluidzähler nach Anspruch 12, **dadurch gekennzeichnet**, daß das andere Lagerteil (10; 210; 410) eine eine vertiefte Lagerfläche aufweisende Lagerschale bildet.

14. Fluidzähler nach Anspruch 13, **dadurch gekennzeichnet**, daß am freien Ende der Achse (220; 420) ein sich koaxial erstreckender Führstift (251; 451) vorgesehen ist, der sich mit seitlichem Spiel in eine Bohrung im Flügelrad (203; 403) erstreckt, und daß der Bereich zwischen Grund der Bohrung und freiem Ende des Führstiftes (251; 451) über einen seitlichen Kanal (250; 450) mit dem Innenraum des Gehäuses (201; 401) verbunden ist.

15. Fluidzähler nach Anspruch 12, **dadurch gekennzeichnet**, daß das andere Lagerteil (110) aus einem sich koaxial zur Mittelachse des Flügelrades (103) erstreckenden Lagerstift besteht, der sich mit seitlichem Spiel in eine Bohrung im Flügelrad (10) erstreckt, an deren Grund das flügelradseitige Lagerteil (109) sitzt.

16. Fluidzähler nach Anspruch 15, **dadurch gekennzeichnet**, daß der Berührungsbereich von Lagerstift (110) und flügelradseitigem Lagerteil (109) über einen im Flügelrad (103) ausgebildeten Seitenkanal (150) mit dem Innenraum des Gehäuses (101) verbunden ist.

17. Fluidzähler nach einem der Ansprüche 1 bis 11, **dadurch gekennzeichnet**, daß das Flügelrad (303) von einem im Innenraum des Gehäuses (301) angeordneten, in seiner Wandung Wasserdurchtrittsöffnungen (363, 354) aufweisenden Gehäuseteil (360) umgeben ist und daß das andere Lagerteil (362) an der der Abdeckung (325) gegenüberliegenden Bodenwand (361) des Gehäuseteils (360) vorgesehen ist.

18. Fluidzähler nach einem der Ansprüche 1 bis 17, **dadurch gekennzeichnet**, daß das andere Lagerteil (410) im Einbauzustand oberhalb des flügelradseitigen Lagerteils (409) liegt, daß sich das Flügelrad (403) in der Ruhelage über die Achse (420) abstützt und daß das flügelradseitige Lagerteil (409) bei Drehung des Flügelrades (403) im Meßbetrieb in Eingriff mit dem anderen Lagerteil (410) steht.

Fig. 1

Fig. 2

Fig. 3

Fig. 4

Fig. 5

Fig. 6

Fig. 7

Fig. 8

427  405  403  410  409  407  401

401'

401"

425

402

444  443

413

440

EP 0 512 325 A2

18

Fig. 9

Fig. 10

407   408   450   410   409   451   407   403

401

405

405

406

420

441

440

425

EP 0 512 325 A2